# FASCICULE DE BREVET EUROPEEN

(11) **EP 0 901 647 B1**
(45) Date de publication et mention de la délivrance du brevet: **31.10.2001**
(21) Numéro de dépôt: 97925122.0
(22) Date de dépôt: 23.05.1997
(51) Int. Cl.: G02B 23/24, F27D 21/02

(54) **SONDE ENDOSCOPIQUE D'INSPECTION POUR BATTERIES DE FOURS A COKE**
ENDOSKOPISCHE SONDE ZUR UNTERSUCHUNG EINER KOKSOFENBATTERIE
ENDOSCOPIC INSPECTION SENSOR FOR COKE OVEN BATTERIES

(30) Priorité: 30.05.1996 FR 9606645
(43) Date de publication de la demande: 17.03.1999
(73) Titulaire: CENTRE DE PYROLYSE DU CHARBON DE MARIENAU ( C.P.M.), 57600 Forbach (FR)
(72) Inventeur: ISLER, Daniel, F-57730 Folschviller (FR); GAILLET, Jean-Paul, F-57730 Peit-Ebersviller (FR); BENDIF, Madjid, F-57800 Freyming-Merlebach (FR); BASTIAN, Norbert, F-57800 Freyming-Merlebach (FR)
(74) Mandataire: Ventavoli, Roger
(86) Numéro de dépôt international: FR9700902
(87) Numéro de publication internationale: WO9745761

(56) Documents cités:
- EP-A- 0 364 578
- FR-A- 2 102 259
- GB-A- 2 168 811
- US-A- 4 131 914
- US-A- 5 519 543

## Description

La présente invention concerne la maintenance de fours industriels, en particulier des batteries de fours à coke. Elle à trait plus précisément à une surveillance précise de l'état des réfractaires formant les parois des carneaux de ces fours, pendant la marche même de ceux-ci.

Au cours de son exploitation, une batterie de fours à coke subit des contraintes thermo-mécaniques essentiellement causées par le caractère cyclique des opérations d'enfournement et de défournement des matières. Il en résulte à plus ou moins brève échéance des déformations permanentes des parties métalliques et réfractaires qui vont réduire la durée de vie de la batterie.

Pour atteindre des durées de vie satisfaisantes, de trente années et plus, il est nécessaire d'établir régulièrement un diagnostic précis de l'état des réfractaires de fours. Toutefois, ce diagnostic est souvent difficile à réaliser en raison de l'accessibilité très limitée de certaines zones du four, comme les carneaux par exemple, et qui sont d'ailleurs les endroits les plus sollicités thermiquement. Il peut en résulter des interventions trop tardives, des réparations mal adaptées ou inutiles.

L'endoscopie, technique désormais largement répandue dans de nombreux secteurs de l'industrie, reste cependant encore à ce jour peu utilisée dans le domaine de la cokerie, possiblement parce que la plupart des endoscopes proposés s'avère mal adaptée à l'inspection des réfractaires au sein des carneaux des fours à coke, sans doute en raison, notamment des conditions thermiques extrèmes qui y règnent.

Schématiquement, les sondes actuellement utilisées ou utilisables pour l'inspection des carneaux de four à coke peuvent se distinguer en deux types qui ont en commun le fait que la tête d'inspection, abritant l'élément sensible, est suspendue dans le carneau à l'extrémité d'une ligne de support qui la raccorde à une unité de manoeuvre disposée extérieurement au four.

Selon un premier type connu, dans lequel se situent précisément les endoscopes, la ligne de support est constituée par un long tube métallique rigide refroidi par circulation interne d'eau et manoeuvré en translation verticale par un système à pignon-crémaillère. Cette réalisation forme un ensemble lourd, encombrant, peu maniable, destiné en fait à rester en place en permanence, alors que les besoins d'inspection sont de courte durée et espacés dans le temps.

Dans un deuxième type de sonde connu, auquel appartient la présente invention, le tube rigide est remplacé par une gaine souple longitudinalement s'enroulant sur un tambour dont la partie basse baigne dans un bac à eau destiné à humecter la gaine pour assurer son refroidissement. Cette technologie résulte de la découverte que l'on pouvait en fait se passer d'un refroidissement par circulation interne d'eau à condition de disposer d'un appareillage simple, léger, rapidement manoeuvrable, grâce auquel la rapidité d'exécution des opérations d'inspection permettait de se passer d'un système de refroidissement élaboré. C'est ainsi qu'a été concue et développée la sonde décrite dans le document FR-B- 84.18822. Dans cette sonde, la tête sensible est constituée par un pyromètre optique de forme allongée (type "crayon") protégé à l'intérieur d'un manchon en matériau réfractaire fibreux lesté à la base et dont la partie supérieure est arrimée à l'extrémité de la gaine-support souple abritant un filin d'acier au bout duquel est suspendu le pyromètre. Cette sonde donne jusqu'ici pleinement satisfaction, semble-t'il. Toutefois, elle se limite à fournir la température des gaz au sein des carneaux, et cette grandeur n'est qu'un indicateur éloigné de l'état des réfractaires des parois.

Le but de la présente invention est de parvenir à une observation visuelle directe de ces parois.

A cet effet, l'invention a pour objet une sonde endoscopique pour l'inspection des parois réfractaires de fours industriels, les carneaux de fours à coke en particulier, du type comprenant une tête d'inspection enfermant l'élément sensible et arrimée à l'extrémité d'une ligne de support souple longitudinalement et rigide en torsion axiale, qui la raccorde à une unité de manoeuvre pourvue de moyens d'humidification de la ligne, sonde caractérisée en ce que la tête d'inspection est mobile en rotation axiale et formée par un assemblage démontable de deux parties: une partie permanente arrimée à l'extrémité de la ligne de support par un joint rotatif et abritant un appareil de prise de vues (avantageusement une caméra-vidéo miniature), et une partie interchangeable, fixée à la partie permanente dans le prolongement de celle-ci et comportant une ouverture pariétale (frontale ou latérale) pourvue d'un objectif suivi d'une optique d'acheminement de l'énergie lumineuse captée par l'objectif vers l'appareil de prise de vues ; et en ce que des moyens sont embarqués dans la sonde pour assurer une motorisation de la rotation axiale de la tête d'inspection et le réglage de sa position angulaire par rapport à la ligne de support.

Conformément à une réalisation, la ligne de support est constituée par une armature métallique tubulaire en fils tressés revètue par une enveloppe souple en matière réfractaire fibreuse.

Selon une disposition préférée, les moyens embarqués pour actionner en rotation la tête d'inspection et lui assurer une position angulaire voulue sont constitués par un moteur solidaire de la ligne support et comportant un arbre de transmission à pignon terminal en prise sur la paroi interne de celle-ci.

Dans le cas d'une partie interchangeable à ouverture pariétale latérale, l'optique d'acheminement comprend un prisme de renvoi de l'énergie lumineuse captée par la lentille vers la caméra et situé au voisinage de ladite lentille.

Comme on l'aura compris, l'invention réside pour l'essentiel dans la combinaison entre une ligne de support souple dans le sens "long" pour pouvoir être enroulée, mais rigide autrement afin de lui interdire tout mouvement de torsion inopiné autour de son axe, avec, à son extrémité libre, des moyens d'observation visuelle des parois des carneaux naturellement éclairées dans le rouge par le rayonnement thermique du four en marche, et montés mobiles en rotation axiale à l'aide d'un actionneur embarqué piloté à distance par un opérateur à son poste de contrôle où lesdits moyens d'observation lui restituent une image réelle et instantanée des parois des carneaux.

L'invention sera bien comprise et d'autres aspects et avantages apparaîtront clairement au vu de la description qui suit donnée à titre d'exemple de réalisation en référence aux planches de dessins annexées sur lesquelles:
- la figure 1 montre en section verticale une portion de carneaux d'une batterie de fours à coke sur le plancher desquels un endoscope selon l'invention opère;
- la figure 2 montre en coupe longitudinale axiale le détail d'une tête sensible montée en bout de ligne de l'endoscope selon l'invention;
- la figure 3 est une représentation analogue à celle de la figure 2, mais relative à une variante de réalisation quant à la direction d'observation.

Sur les figures, les mêmes éléments sont désignés par des références identiques.

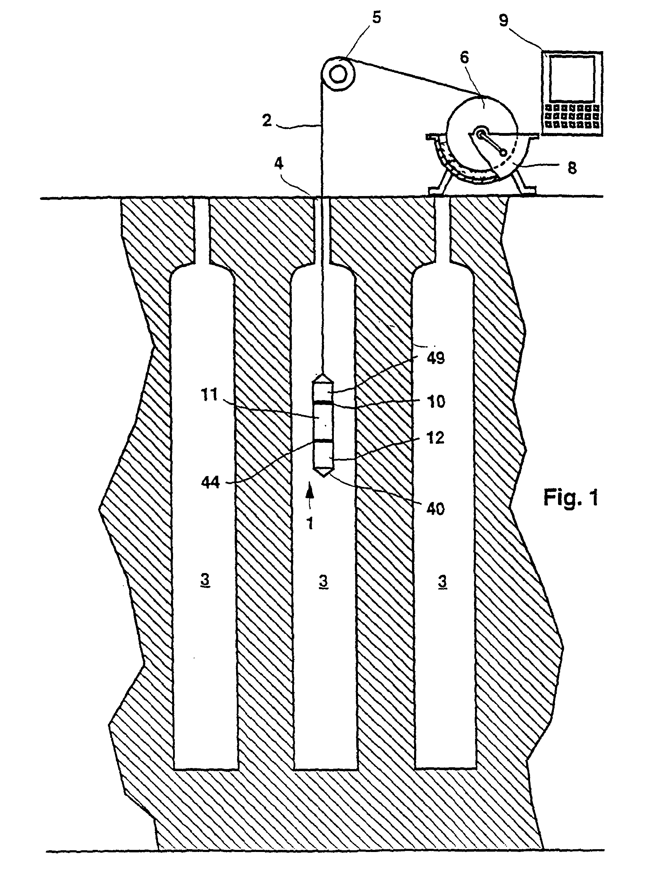

En se reportant d'abord sur la figure 1, on voit que la tête d'inspection 1 est suspendue par sa ligne de support souple 2 et pénètre par gravité à l'intérieur du carneau 3 par une ouverture supérieure 4 de celui-ci. La ligne de support souple 2 passe autour d'une poulie de renvoi 5 et vient s'enrouler sur un tambour 6 pourvu de moyens de mise en rotation illustrés par la manivelle 7. Un bac demi-cylindrique 8 rempli d'eau imerge la partie basse du tambour d'enroulement 6 de manière à mouiller la ligne support 2. Une console à écran 9 est montée à hauteur d'homme sur le chassis du tambour et permet à l'opérateur de réaliser l'ensemble des opérations sous un contrôle visuel permanent que lui procure l'écran de visualisation affichant ce que voit la tête d'inspection 1. Celle-ci est extérieurement constituée d'une capsule métallique de forme allongée (une cinquantaine de cm de long, pour un diamètre de quelques centimètres). logée dans une coque rigide (non représentée) de matériau réfractaire de protection thermique et contre les chocs. La tête d'inspection se compose de deux portions consécutives, à peu près de même longueur, et fixées l'une à l'autre par une bride d'assemblage formée par une bague molletée 44 vissable à la main: une portion "amont" 11 arrimée à la ligne support 2 au moyen d'un raccord tournant 10, et une partie "aval" 12 interchangeable. Ce raccord tournant 10 peut être classiquement réalisé à l'aide d'un roulement à billes 13 dont la virole intérieure est montée autour d'une portée annulaire entrante 14 de l'embout 49 formant la terminaison de la ligne-support 2, et dont la virole extérieure est en prise avec la paroi interne de la partie "aval" mobile en rotation. Bien entendu, ces dispositions peuvent être inversées. On prendra soin cependant de toujours dimensionner le joint tournant 10 afin de ne ménager entre la partie "aval" rotative et la partie "amont" fixe qu'un simple jeu fonctionnel 15 de manière à assurer au mieux l'étancheité vis à vis de l'extérieur. Une collerette 50, ménagée en bout de portée 14, assure le blocage en translation de la tête 1 par rapport à la ligne-support.

Comme on le voit, l'embout 49 est fixé au reste de la ligne-support 2 au moyen d'un collier de serrage 16 en deux parties vissées l'une à l'autre et dont les extrémités libres forment des poussoirs qui appliquent l'une contre l'autre les collerettes 17 et 17' prévues à cet effet respectivement à l'extrémité de l'embout 49 et à l'extrémité de la bride 18 sur laquelle vient en prise la gaine flexible 19 constitutive de la ligne support 2.

Conformémént à une caractéristique essentielle de l'invention, cette gaine doit être suffisamment souple pour s'enrouler sur un tambour, d'une cinquantaine de cm de diamètre par exemple, et pouvoir retrouver une forme rectiligne sous l'effet du simple poids de la tête d'inspection 1 lors du déroulement. Dans le même temps, cette gaine doit être suffisamment rigide en torsion axiale pour éviter de surimposer des mouvements de rotation aléatoires à celui de la partie "aval" de la tête d'inspection piloté par l'opérateur. A cet effet, la gaine flexible 19 est avantageusement constituée par une armature en fil d'acier inox plat tréssé similaire aux gaines métalliques utilisées pour la protection et le blindage de cables électriques.

Cette gaine est emmaillotée dans une couche 20 d'un isolant souple fibreux, tel que de la laine de roche en bande, apte à s'humecter par trempe dans l'eau du bac et protéger ainsi thermiquement la gaine et les différents cables et fils qu'elle contient. L'assemblage est assuré par un collier de serrage. Dans une gaine de ce type, une cane souple peut fort bien être implantée tout du long pour permettre une circulation d'air de refroidissement, si on le souhaite.

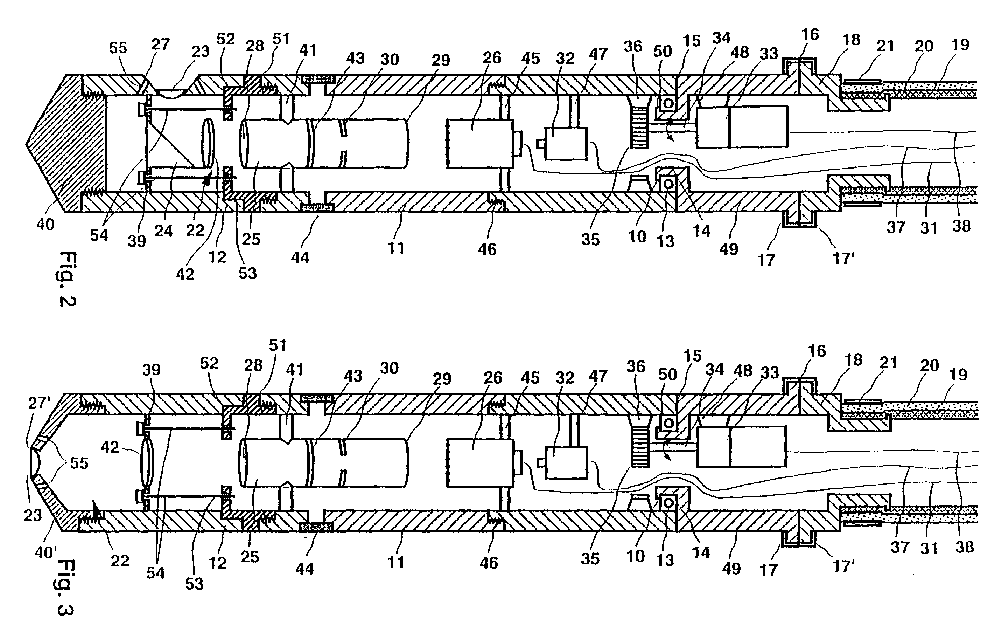

En se reportant à la figure 2 plus précisément, on voit que l'intérieur de la tête d'inspection 1 à visée latérale est pourvu d'un certains nombre d'organes qui sont les suivants, en commencant par le bas:

D'abord une ligne optique 22 de saisie visuelle des images vues par la sonde et comprenant: un objectif "grand angle" 23 couplé à un prisme 24 de renvoi associé à un doublet d'adaptation 42 qui constitue le premier élément de la chaîne optique servant au transfert de l'image formée par l'objectif 23 en direction de l'appareil de prise de vues. Le reste est constitué par un tube optique 25 monté devant l'appareil de prise de vues 26. L'objectif 23 prend place dans une ouverture 27 ménagée à cet effet dans la paroi latérale de la tête d'inspection 1. Son champ visuel détermine la taille de la plage observable sur la paroi des carneaux. Le prisme 24 renvoie à angle droit le faisceau lumineux reçu de l'objectif 23 de manière à l'orienter selon l'axe longitudinal de la sonde en direction du tube optique 25. Ce dernier, pourvu d'un doublet d'entrée 28 et d'un doublet de sortie 29 à ses extrémités, d'un filtre d'atténuation ou de correction spectrale 43 et d'un diaphragme d'adaptation de luminosité 30, est destiné à transporter l'image vers l'appareil de prise de vues 26, avantageusement constitué par une micro-caméra à réseau matriciel de photodiodes. L'image de la plage inspectée ainsi reçue par la caméra est envoyée sur l'écran de visualisation 9 à l'aide du cable souple 31.

La tête d'inspection 1 comprend en outre un codeur incrémental 32 permettant à tout instant de connaître la position angulaire de l'objectif 23 (donc de la direction d'observation) par rapport à un point "zéro" de référence et ainsi pouvoir accomplir un ballayage circulaire complet du carneau sous contrôle permanent de l'opérateur, ou de retrouver aisément une plage préalablement observée.

La tête d'inspection 1 est également pourvue d'un moteur réversible synchrone à courant continu 33 associé à ses organes de transmission que sont un arbre d'entrainement 34 à l'extrémité duquel un pignon 35 engrène sur une roue dentée 36 fixée contre la paroi intérieure de la partie "aval" mobile en rotation de la sonde.

De tous les équipements spécifiés ci-avant, seul le moteur 33, avec son arbre à pignon 34, 35, n'est pas solidaires de la tête rotative 1. Sa fixation dans l'embout est assurée par une attache 48.

Des cables électriques 37 et 38 assurent les liaisons nécessaires du codeur 32 et du moteur 33 avec l'extérieur.

Tous ces équipements sont fixés dans la sonde à l'aide d'attelles qui les relient rigidement à la paroi intérieure. Les attelles 39 de fixation du prisme 24 et de son doublet d'adaptation 42 associé sont accessibles par l'avant de la sonde après enlèvement du nez de sonde 40.

Une accessibilité améliorée de cette partie essentielle de la sonde peut avantageusement être réalisée à l'aide de la bride 51 vissée à l'extrémité du tube 11 et présentant d'une part une portée cylidrique 52 sur laquelle vient s'enfiler le tube constitutif de la partie interchangeable 12 en s'autocentrant, et d'autre part une couronne radiale 53 pourvue de taraudages dans lesquels viennent prendre des vis de serrage 54. Ces dernières, également accessible après enlèvement du nez 40, portent à leur extrémité sur l'attelle 39 qu'elles traversent assurant ainsi par serrage la fixation de la partie interchangeable 12 au tube 11.

L'attelle 41 de fixation du tube optique 25 est accessible depuis la bague démontable 44 permettant aussi l'acces au filtre 43. L'attelle 45 de fixation de l'appareil de prise de vues 26 est accessible grâce à une liaison vissée 46 qui réunit les deux tronçons contigus constitutifs de la partie permanente 11. Elle permet également, après retrait de la caméra 26, d'accéder à l'attelle 47 d'ancrage du codeur incrémental 32.

On observera que des petites canalisations 55 sont ménagées dans le tube 12 au niveau de l'ouverture 27 et réparties autour de l'objectif 23. Ces canalisations qui relient l'intérieur de la sonde à l'espace ménagé devant l'objectif 23, permettent l'établissement d'un rideau d'air de protection devant la lentille frontale de cet objectif si, conformément à une mise en ouvre préférée de l'invention, l'intérieur de la sonde est parcouru par un courant d'air de refroidissement.

A l'exception du prisme 24, devenu alors inutile, on retrouve tous ces éléments et dispositions particulières à l'identique dans la tête d'inspection de la figure 2 adaptée à une visée axiale. Dans cette variante, l'ouverture latérale 27 a été remplacée par une ouverture axiale 27' ménagée dans l'embout terminal 40' formant le nez de sonde. Cette ouverture reçoit l'objectif à grand angle 23, lequel transmet alors l'image captée au tube optique 25.

Tout le reste est inchangé. On comprend que l'on peut ainsi passer aisement avec le même équipement de base d'une configuration à visée latérale (fig. 1) à une configuration à visée axiale (fig. 2) et réciproquement, simplement en remplacant la partie "aval" interchangeable 12, qui peut être aisément démontée à la main grâce à la bague de vissage 44. De même, pour une configuration donnée, on peut passer d'une vision panoramique à une zone plus détaillée de la surface à inspecter, grâce à un jeu de parties interchangeables doté d'objectifs 23 à angle optique progressif allant de 30 à 105°.

Bien entendu, l'invention ne se limite pas aux exemples décrits, mais s'étend à de multiples variantes ou équivalents dans la mesure où sont reproduites les caractéristiques essentielles de l'endoscope tel que défini dans les revendications jointes.

## Revendications

1. Sonde endoscopique pour l'inspection des parois réfractaires de fours industriels, du type comprenant une tête d'inspection enfermant l'élément sensible et arrimée à l'extrémité d'une ligne de support souple longitudinalement et rigide en torsion axiale qui la raccorde à une unité de manoeuvre pourvue de moyens d'humidification de la ligne, sonde **caractérisée en ce que** la tête d'inspection (1) est mobile en rotation axiale et formée par un assemblage démontable de deux parties: une partie permanente (11) arrimée à l'extrémité de la ligne de support par un joint rotatif (10) et abritant un appareil de prise de vues (26), et une partie interchangeable (12) rigidement fixée à ladite partie permanente dans le prolongement de celle-ci à l'aide d'un raccord démontable (44), et comportant une ouverture pariétale pourvue d'un objectif (23) suivi d'une ligne optique (22) d'acheminement de l'image captée par ledit objectif vers l'appareil de prise de vues (26), et **en ce que** des moyens (32 à 36) sont embarqués dans la sonde pour assurer une motorisation de la rotation axiale de la tête d'inspection et le réglage de sa position angulaire par rapport à la ligne de support.

2. Sonde endoscopique selon la revendication 1, **caractérisée en ce que** la ligne de support (2) est constituée par une armature métallique tubulaire (19) en fils tressés revètue par une enveloppe souple (20) en matière réfractaire.

3. Sonde endoscopique selon la revendication 1, **caractérisée en ce que** l'appareil de prise de vues (26) est une caméra à réseau matriciel de photodiodes.

4. Sonde endoscopique selon la revendication 1, **caractérisée en ce que** les moyens embarqués pour assurer la rotation axiale de la tête d'inspection sont constitués par un moteur (33) animant un arbre d'entrainement (34) à pignon (35) en prise contre la paroi intérieure de la partie permanente (11) de la tête de sonde.

5. Sonde endoscopique selon la revendication 1 ou 4, **caractérisée en que** les moyens pour assurer le réglage de la position angulaire de la tête d'inspection sont constitués par un codeur incrémental (32) monté dans la partie permanente (11).

6. Sonde endoscopique selon la revendication 1 **caractérisée en ce que** la partie interchangeable (12) comporte une ouverture pariétale latérale (27) pourvue d'un objectif (23) associé à un prisme (24) de renvoi de l'image captée selon l'axe de la tête de sonde en direction de la ligne optique (22) disposée au voisinage immédiat dudit prisme.

7. Sonde endoscopique selon la revendication 1 **caractérisée en ce que** la partie interchangeable (12) comporte une ouverture pariétale axiale (27') ménagée dans le nez de sonde (40') et pourvue d'un objectif (23) envoyant l'image captée directement vers la ligne optique (22') disposée dans son voisinage immédiat.

8. Sonde endoscopique selon la revendication 1, **caractérisée en ce que** l'extrémité de la ligne-support (2) servant à l'arrimage de la tête d'inspection (1) est constituée par un embout (49) présentant, une extrémité, une portée (14) d'appui du joint tournant (10) et, à son autre extrémité, un raccord (16,17) de liaison rigide démontable avec le reste de la ligne support.

9. Sonde endoscopique selon la revendication 1 **caractérisée en ce que** le raccord démontable reliant la partie permanente (11) à la partie interchangeable (12) est constitué d'une bague vissée (44).

10. Sonde endoscopique selon la revendication 1 **caractérisée en ce qu'**elle est pourvue de moyens pour une circulation interne d'air de refroidissement.

## Patentansprüche

1. Endoskopiesonde zur Inspektion der feuerfesten Wände von Industrieöfen, die einen Inspektionskopf aufweist, in den das Messelement eingesetzt ist und der am Ende einer in Längsrichtung biegsamen aber in Axialrichtung torsionssteifen Trägerleitung befestigt ist, die ihn mit einer Handhabungseinheit verbindet, die eine Befeuchtungsanordnung für die Leitung aufweist, **dadurch gekennzeichnet, dass** der Inspektionskopf (1) in Axialrichtung drehbeweglich ist und aus einer zerlegbaren Anordnung zweier Abschnitte besteht: einem ständig am Ende der Trägerleitung über eine Drehdichtung (10) befestigten Abschnitt (11), der eine Anordnung (26) zur Aufnahme von Bildern aufweist und einem auswechselbaren Abschnitt (12), der am ständig befestigten Abschnitt in dessen Verlängerung über eine lösbare Verbindung (44) fest angeordnet ist und eine Wandöffnung aufweist, die mit einem Objektiv (23) versehen ist, dem eine optische Strecke (22) nachgeordnet ist für die Übertragung des vom Objektiv aufgenommenen Bildes zur Anordnung (26) zur Aufnahme von Bildern, sowie dadurch, dass in die Sonde eine Anordnung (32 bis 36) eingesetzt ist, die eine Motorisation der axialen Rotation des Inspektionskopfes und eine Steuerung seiner Winkellage bezüglich der Trägerleitung gewährleistet.

2. Endoskopiesonde nach Anspruch 1, **dadurch gekennzeichnet, dass** die Trägerleitung (2) aus einer rohrförmigen metallischen Struktur (19) aus geflochtenen Drähten besteht, die von einer biegsamen Hülle (20) aus feuerfestem Material umgeben ist.

3. Endoskopiesonde nach Anspruch 1, **dadurch gekennzeichnet, dass** die Anordnung (26) zur Aufnahme von Bildern eine Kamera mit als Netzmatrix angeordneten Fotodioden ist.

4. Endoskopiesonde nach Anspruch 1, **dadurch gekennzeichnet, dass** die eingesetzte Anordnung zur Gewährleistung der axialen Rotation des Inspektionskopfes aus einem Motor (33) besteht, der eine Antriebswelle (34) mit einem Ritzel (35) antreibt, das in die Innenwand des ständig befestigten Abschnitts (11) des Inspektionskopfes eingreift.

5. Endoskopiesonde nach Anspruch 1 oder 4, **dadurch gekennzeichnet, dass** die Anordnung zur Gewährleistung der Steuerung der Winkellage des Inspektionskopfes aus einem Schrittkodierer (32) besteht, der in den ständig befestigten Abschnitt (11) eingesetzt ist.

6. Endoskopiesonde nach Anspruch 1, **dadurch gekennzeichnet, dass** der auswechselbare Abschnitt (12) eine seitliche Wandöffnung (27) aufweist, in die ein Objektiv (23) eingesetzt ist, dem ein Umlenkprisma (24) zugeordnet ist für das empfangene Bild entlang der Achse des Inspektionskopfes in Richtung zur optischen Strecke (22), die in unmittelbarer Nähe des Prismas angeordnet ist.

7. Endoskopiesonde nach Anspruch 1, **dadurch gekennzeichnet, dass** der auswechselbare Abschnitt (12) eine axiale Wandöffnung (27') aufweist, die in der Schutzkappe (40') der Sonde ausgebildet ist und die mit einem Objektiv (23) versehen ist, dass das empfangene Bild direkt der optischen (22') überträgt, die in seiner unmittelbaren Nähe angeordnet ist.

8. Endoskopiesonde nach Anspruch 1, **dadurch gekennzeichnet, dass** das Ende der Trägerleitung (2), das zur Befestigung des Inspektionskopfes (1) dient, aus einem Rohrstück (49) besteht, an dessen einem Ende ein Anschlag (14) zur Abstützung der Drehdichtung (10) und an dessen anderem Ende ein Verbindungsteil (16,17) zur lösbaren, steifen Verbindung mit dem Rest der Trägerleitung vorgesehen ist

9. Endoskopiesonde nach Anspruch 1, **dadurch gekennzeichnet, dass** das lösbare Verbindungsteil, das den ständig befestigten Abschnitt (11) mit dem auswechselbaren Abschnitt (12) verbindet, aus einem Schraubring (44) besteht.

10. Endoskopiesonde nach Anspruch 1, **dadurch gekennzeichnet, dass** sie mit einer Anordnung für eine innere Zirkulation von Kühlluft versehen ist.

## Claims

1. Endoscopic probe for inspecting the refractory walls of industrial furnaces, of the type comprising an inspection head enclosing the sensitive element and attached to the end of a longitudinally flexible supporting line which is rigid under axial torsion and connects it to an operating unit provided with means for moistening the line, **characterized in that** the inspection head (1) is movable in axial rotation and is formed by a demountable assemblage of two parts: a permanent part (11), attached to the end of the supporting line by means of a rotary joint (10) and housing a photography device (26), and an interchangeable part (12), fastened rigidly to said permanent part in the extension of the latter with the aid of a removable joint (44) and comprising a parietal orifice provided with an objective (23) followed by an optical line (22) for conveying the image picked up by said objective toward the photography device (26), and **in that** means (32 to 36) are mounted in the probe in order to ensure motorization of the axial rotation of the inspection head and adjustment of its angular position in relation to the supporting line.

2. Endoscopic probe according to Claim 1, **characterized in that** the supporting line (2) consists of a tubular metallic reinforcement (19) consisting of braided wires and covered by a flexible casing (20) made of refractory material.

3. Endoscopic probe according to Claim 1, **characterized in that** the photography device (26) is a camera having a photodiode matrix.

4. Endoscopic probe according to Claim 1, **characterized in that** the mounted means for ensuring the axial rotation of the inspection head consist of a motor (33) actuating a drive shaft (34) having a pinion (35) in engagement against the inner wall of the permanent part (11) of the probe head.

5. Endoscopic probe according to Claim 1 or 4, **characterized in that** the means for ensuring adjustment of the angular position of the inspection head consist of an incremental encoder (32) mounted in the permanent part (11).

6. Endoscopic probe according to Claim 1, **characterized in that** the interchangeable part (12) comprises a lateral parietal orifice (27) provided with an objective (23) associated with a prism (24) for returning the image picked up along the axis of the probe head in the direction of the optical line (22) arranged in the immediate vicinity of said prism.

7. Endoscopic probe according to Claim 1, **characterized in that** the interchangeable part (12) comprises an axial parietal orifice (27') made in the probe nose (40') and provided with an objective (23) transmitting the image picked up directly towards the optical line (22') arranged in its immediate vicinity.

8. Endoscopic probe according to Claim 1, **characterized in that** that end of the supporting line (2) serving for attaching the inspection head (1) consists of a connector (49) having, at one end, a bearing surface (14) for the rotary joint (10) and, at its other end, a joint (16, 17) for rigid connection, demountable together with the rest of the supporting line.

9. Endoscopic probe according to Claim 1, **characterized in that** the demountable joint connecting the permanent part (11) to the interchangeable part (12) consists of a screwed ring (44).

10. Endoscopic probe according to Claim 1, **characterized in that** it is provided with means for an internal circulation of cooling air.
